# EUROPEAN PATENT APPLICATION

(11) **EP 4 340 117 A1**
(43) Date of publication of application: **20.03.2024**
(21) Application number: 22807804.4
(22) Date of filing: 10.05.2022
(51) Int. Cl.: H01M 50/538, H01M 50/342, H01M 50/167, H01M 50/107

(54) **SECONDARY BATTERY**

(30) Priority: 14.05.2021 KR 20210062733
(71) Applicant: Samsung SDI Co., Ltd., Yongin-si, Gyeonggi-do 17084 (KR)
(72) Inventor: JUNG, Hyun Ki, Yongin-si, Gyeonggi-do 17084 (KR); KIM, Myung Seob, Yongin-si, Gyeonggi-do 17084 (KR); LEE, Won Sug, Yongin-si, Gyeonggi-do 17084 (KR)
(74) Representative: Marks & Clerk LLP
(86) International application number: PCT/KR2022/006691
(87) International publication number: WO 2022/240156

(57) **Abstract**

The present disclosure relates to a secondary battery, and provides a secondary battery capable of reducing heat generation and improving safety by reducing a welding area. To this end, the present disclosure provides a secondary battery comprising: an electrode assembly having a first tab and a second tab provided at the opposite side to the first tab; a first current collector which is welded on the first tab of the electrode assembly and has a diameter that is greater than the diameter of the electrode assembly; and a case assembly comprising a case which accommodates the electrode assembly and the first current collector, a second current collector which is in close contact with the second tab of the electrode assembly, and a terminal unit which is electrically connected to the second current collector and penetrates through the case.

## Description

### TECHNICAL FIELD

An embodiment of the present disclosure relates to a secondary battery.

### BACKGROUND ART

For example, lithium ion secondary batteries are used as power sources for portable electronic devices as well as hybrid vehicles or electric vehicles because of their advantages, including high operating voltage and high energy density per unit weight.

Such secondary batteries may be classified into cylindrical, prismatic, or pouch-type batteries according to the shape. For example, a cylindrical secondary battery includes a cylindrical electrode assembly, a cylindrical case to which the electrode assembly is coupled, an electrolyte (optional) injected into the case to enable movement of lithium ions, and a cap assembly which is coupled to one side of the case to prevent leakage of the electrolyte and prevents separation of the electrode assembly.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present disclosure provides a secondary battery capable of reducing heat generation and improving safety and reliability by reducing the number of resistance welding areas.

### SOLUTION TO PROBLEM

A secondary battery according to the present disclosure may include: an electrode assembly having a first tab and a second tab provided at the opposite side to the first tab; a first current collector which is welded on the first tab of the electrode assembly and has a diameter that is greater than the diameter of the electrode assembly; and a case assembly comprising a case which accommodates the electrode assembly and the first current collector, a second current collector which is in close contact with the second tab of the electrode assembly, and a terminal unit which is electrically connected to the second current collector and penetrates through the case. The secondary battery may further include a support member disposed on the first current collector. The secondary battery may further include a safety vent disposed on the support member and blocking the case.

In this way, the present disclosure may provide a secondary battery in which, by providing only one welding region inside the battery, heat generation is reduced and safety and reliability are improved.

The first current collector may include a disk, a plurality of slits provided on the disk and welded to the first tab, and a plurality of extending portions extending outward from the disk and brought into close contact with the case.

In this way, the present disclosure may provide a secondary battery in which the plurality of extending portions provided in the first current collector may be coupled to the case in an interference-fit manner, and thus the second tab of the electrode assembly and the second current collector are strongly adhered to and/or contacted with each other in a non-welding manner.

The extending portions may be bent from the disk and welded to the case.

In this way, the present disclosure may provide a secondary battery in which mechanical coupling between the first current collector and the case is improved, and the electrical resistance is reduced.

The support member may be disposed on the extending portions.

In this way, the present disclosure may provide a secondary battery in which the supporting member pushes the extending portions toward the case, the mechanical coupling force between the first current collector and the case is improved and electrical resistance is reduced.

A first gasket interposed between each of the extending portions, the support member, the case, and the safety vent, may be further included.

In this way, the present disclosure may provide a secondary battery in which the sealing force is further improved by the first gasket.

A spring interposed between the second tab and the second current collector may be further included.

In this way, the present disclosure may provide a secondary battery in which the second tab of the electrode assembly and the second current collector are elastically closely adhered to and/or brought into contact with each other, and mutual adhesion and/or contact force are improved.

The case may further include a beading part bent inwardly in a region corresponding to the first current collector and a crimping part bent inwardly while covering the first gasket. The case may further include a seaming portion bent outward together with the first current collector. The case may further include a curling portion bent toward the first current collector.

In this way, the present disclosure may provide a secondary battery in which by providing the battery with various sealing structures, such as a beading part, a crimping part, a seaming portion and / or a curling portion, the sealing force is improved.

### ADVANTAGEOUS EFFECTS OF DISCLOSURE

The present disclosure may provide a secondary battery capable of reducing heat generation and improving safety and reliability by reducing the number of resistance welding areas inside a case of secondary battery.

### BRIEF DESCRIPTION OF DRAWINGS

FIGS. 1A, 1B, and 1C are perspective views and a cross-sectional view illustrating an exemplary secondary battery according to the present disclosure.
FIGS. 2A to 2E are diagrams illustrating a method for manufacturing an exemplary secondary battery according to the present disclosure.
FIGS. 3A, 3B, and 3C are diagrams illustrating examples of beading/crimping, seaming, and curling for improving a sealing force in an exemplary secondary battery according to the present disclosure.

### BEST MODE

Hereinafter, a preferred embodiment of the present invention will be described in detail with reference to the accompanying drawings.

Examples of the present disclosure are provided to more completely explain the present disclosure to those skilled in the art, and the following examples may be modified in various other forms. The present disclosure, however, may be embodied in many different forms and should not be construed as being limited to the example (or exemplary) embodiments set forth herein. Rather, these example embodiments are provided so that this invention will be thorough and complete and will convey the aspects and features of the present disclosure to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

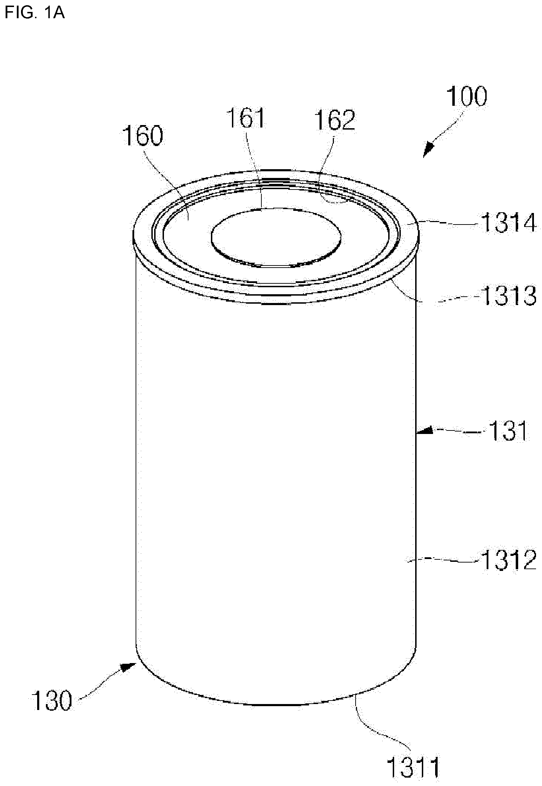

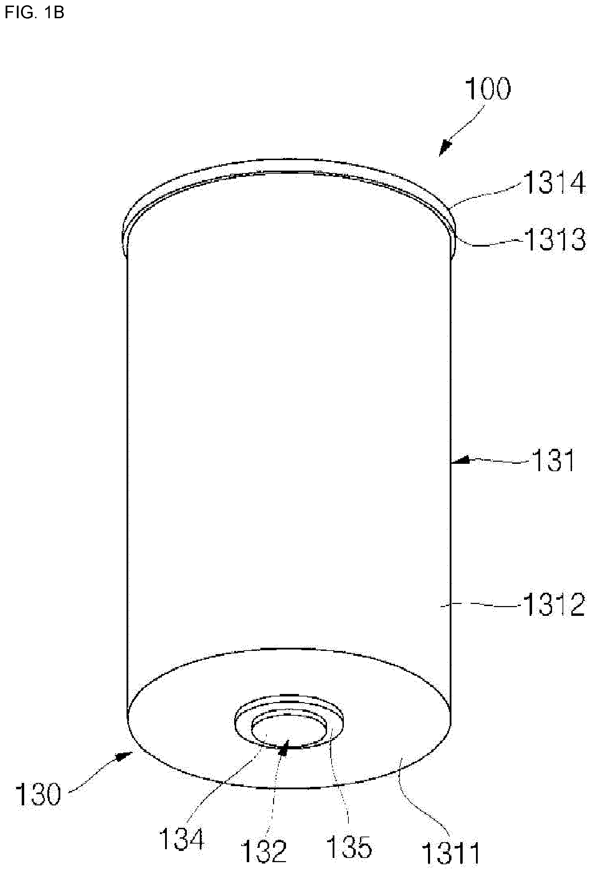

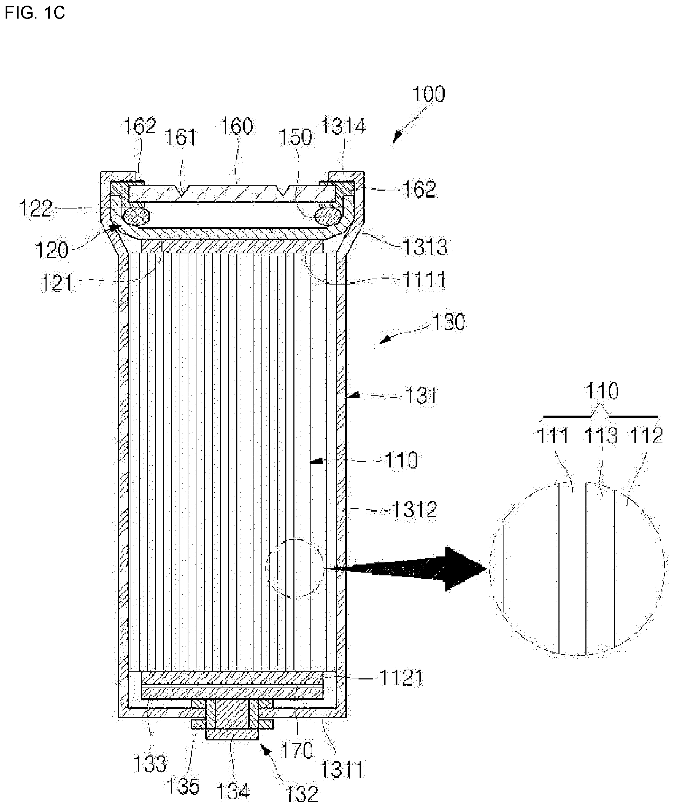

FIGS. 1A, 1B, and 1C are perspective views and a cross-sectional view illustrating an exemplary secondary battery 100 according to the present disclosure.

In the example shown in FIGS. 1A, 1B, and 1C, the exemplary secondary battery 100 according to the present disclosure may include a cylindrical electrode assembly 110, an anode current collector 120, and a cylindrical case assembly 130. In some examples, the exemplary secondary battery 100 according to the present disclosure may further include a support member 150 and a safety vent 160.

The electrode assembly 110 may be provided in a cylindrical shape. The electrode assembly 110 may include an anode plate 111 coated with an anode active material (e.g., graphite, carbon, etc.), a cathode plate 112 coated with a cathode active material (e.g., a transition metal oxide (LiCoO₂, LiNiO₂, LiMn₂O₄, etc.)), and a separator 113 positioned between the anode plate 111 and the cathode plate 112 to prevent a short circuit and to allow only the movement of lithium ions. In some examples, the anode plate 111, the cathode plate 112, and the separator 113 may be wound in a substantially cylindrical shape. In some examples, the anode plate 111 may include a copper (Cu) foil, the cathode plate 112 may include an aluminum (Al) foil, and the separator 113 may include polyethylene (PE) or polypropylene (PP).

In some examples, the anode plate 111 may be provided with an anode tab 1111 protruding and extending a certain length upward, and the cathode plate 112 may be provided with a cathode tab 1121 protruding and extending a certain length downward. However, the reverse is also possible. In addition, the anode tab 1111 may include copper (Cu), a copper alloy, nickel (Ni), or a nickel alloy, and the cathode tab 1121 may include aluminum (Al) or an aluminum alloy. In some examples, the anode tab 1111 may include or be referred to as a first tab, an anode substrate tab, or an anode uncoated portion. In some examples, the cathode tab 1121 may include or be referred to as a second tab, a cathode substrate tab, or a cathode uncoated portion.

As will be described again below, the anode tab 1111 may be electrically connected to the anode current collector 120 by laser welding, and the cathode tab 1121 may be electrically connected to the cathode current collector 133 by mechanically close adhesion and/or contact.

The anode current collector 120 may be provided in a substantially circular disk shape. In some examples, the diameter of the anode current collector 120 may be similar to or larger than the diameter of the electrode assembly 110. The anode current collector 120 may be provided on the anode tab 1111 of the electrode assembly 110 and may be electrically connected to the anode tab 1111. In some examples, the anode current collector 120 may be resistance-welded, ultrasonic-welded, and/or laser-welded to the anode tab 1111. In some examples, the anode current collector 120 may include or be referred to as a first current collector or an anode current collector.

In some examples, the anode current collector 120 may include a disk 121, a plurality of slits 1211, and a plurality of extending portions 122. In some examples, the disk 121 may be provided with a plurality of slits 1211, and the slits 1211 may be laser-welded to the anode tab 1111. In some examples, the slits 1211 may be provided in the shape of a straight line perpendicular to the circumference of the electrode assembly 110. In some examples, four slits 1211 may be provided. In some examples, the slits 1211 may be provided in an approximate " cruciform (+)" shape. In some examples, the plurality of extending portions 122 may be provided along the circumference of the disk 121. In some examples, four extending portions 122 may be provided. In some examples, the extending portions 122 may be provided in an approximate crescent shape. In some examples, the extending portions 122 may be bent from the disk 121 obliquely upward and outward. Accordingly, the plurality of extending portions 122 may come into close contact with a sidewall 1312 of the case 131. In some examples, the extending portions 122 may be resistance-welded, ultrasonic-welded, and/or laser-welded to the sidewall 1312 of the case 131. In some examples, the anode current collector 120 may include copper, a copper alloy, nickel, a nickel alloy, or stainless steel. In some examples, the extending portions 122 of the anode current collector 120 may be in close contact with the sidewall 1312 of the case in an interference-fit manner.

The case assembly 130 may include a case 131, a cathode current collector 133 and a terminal unit 132.

In some examples, the case 131 may be provided in an approximately cylindrical shape. In some examples, the case 131 may include a substantially circular bottom portion 1311 and a sidewall 1312 bent upward from the bottom portion 1311 to extend a predetermined length. In some examples, the sidewall 1312 may be divided into a lower region and an upper region, and the diameter of the upper region may be relatively larger than the diameter of the lower region. During the manufacturing process of the secondary battery 100, the top portion of the cylindrical case 131 may be opened. Therefore, during the assembling process of the secondary battery 100, the electrode assembly 110 and the anode current collector 120 may be integrated into one structure and inserted into the cylindrical case 131. Of course, an electrolyte (optional) may then be additionally injected into the cylindrical case 131. The cylindrical case 131 may include steel, a steel alloy, a nickel-plated steel, a nickel-plated steel alloy, aluminum, or an aluminum alloy. In some examples, the anode current collector 120 may be directly welded to the sidewall 1312 of the cylindrical case 131. Therefore, the cylindrical case 131 can operate as an anode.

The terminal unit 132 may include a cathode collector 133, a terminal post 134, and a gasket 135. In some examples, the cathode collector 133 and the terminal pillar 134 may have a compression riveting structure or a compression caulking structure, or may be integrally provided. In some examples, the cathode collector 133 and/or the terminal post 134 may include aluminum or an aluminum alloy. In some examples, the terminal pillar 134 may pass through the bottom portion 1311 of the case 131, and the gasket 135 for insulation and sealing may be interposed between the terminal pillar 134 and the through hole of the bottom portion 1311. In some examples, the gasket 135 may include or be referred to as a second gasket, an insulating portion, or a sealing portion.

In some examples, the cathode current collector 133 may be interposed between the cathode tab 1121 of the electrode assembly 110 and the terminal unit 132 (cathode terminal). In some examples, a spring 170 may be further interposed between the cathode current collector 133 and the terminal unit 132. In some examples, the cathode current collector 133 may not be welded to the cathode tab 1121 but may be tightly adhered to the cathode tab 1121 by means of elasticity of the spring 170. In some examples, the spring 170 may include or be referred to as a flat spring, an elliptical spring, a semi-elliptical spring, a circular spring, a semi-circular spring, or a coil spring.

Accordingly, in the present disclosure, the conventional cathode lead may be omitted, and thus, a welding process of the cathode lead may also be omitted. In some examples, the cathode current collector 133 may include aluminum or an aluminum alloy. In some examples, spring 170 may also include aluminum or an aluminum alloy.

The support member 150 may be disposed on the anode current collector 120. In some examples, the support member 150 may be disposed along the boundary of the disk 121 and the extending portions 122. In some examples, the diameter of the support member 150 before being disposed on the anode current collector 120 may be greater than the diameter of the disk 121. Therefore, the support member 150 is provided on the anode current collector 120 in a state of having a reduced diameter, and accordingly, the support member 150 maintains a state of pushing the extending portions 122 toward the side wall 1312. Accordingly, a contact force between the extending portions 122 and the sidewall 1312 may be increased. In some examples, the support member 150 may include or be referred to as a retaining ring, a snap ring, or a stop ring.

The safety vent 160 is disposed on the support member 150 and also blocks the upper region of the case 131. The safety vent 160 is provided in a substantially disk shape, and may further include a vent groove 161 provided on an upper or lower surface. In some examples, the safety vent 160 may include aluminum or an aluminum alloy.

In some examples, the gasket 162 may be further interposed between each of the extending portion 122 of the anode current collector 120, the support member 150, the case 131, and the safety vent 160. The gasket 162 may prevent the safety vent 160 from electrically/mechanically directly contacting the support member 150 and the case 131 and at the same time may seal the case 131. In some examples, the gasket 162 may include or be referred to as a first gasket, an insulating portion, or a sealing portion.

In some examples, by further including an inwardly bent beading part 1313 and a crimping part 1314, the upper region of the case 131 may pressurize the gasket 162 and accordingly, the sealing force of the case 131 may be further increased.

In this way, in the secondary battery 100 according to the present disclosure, a welding region exists only between the anode tab 1111 and the anode current collector 120, and does not exist between the cathode tab 1121 and the cathode current collector 133. Therefore, during the operation of the secondary battery 100, heat generation in the welding region is reduced. In addition, the safety of the secondary battery 100 is improved due to the reduction of heat generation. In addition, by eliminating conventional cathode lead parts, the internal resistance may be further reduced.

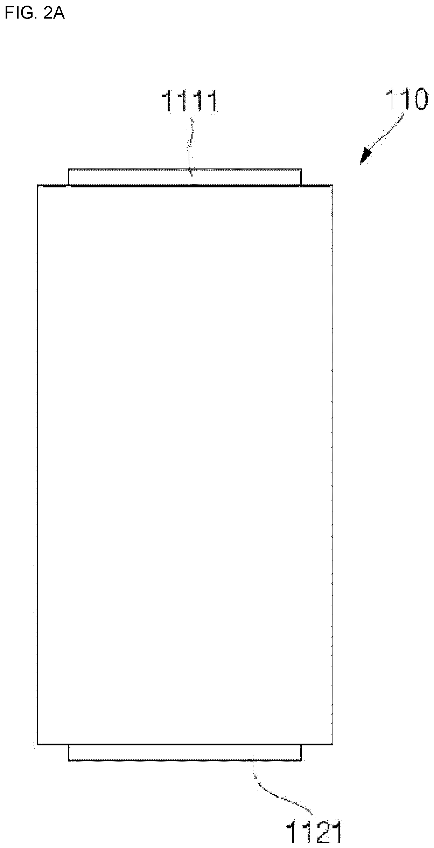

FIGS. 2A to 2E are diagrams illustrating a method for manufacturing an exemplary secondary battery 100 according to the present disclosure. FIG. 2A is a diagram illustrating an early stage of manufacturing an exemplary secondary battery 100 according to the present disclosure. In the example shown in FIG. 2A, an electrode assembly 110 may be provided. The electrode assembly 110 may be wound into a cylindrical shape after an anode plate 111, a separator 113, and a cathode plate 112 are stacked. In some examples, the electrode assembly 110 may include an anode tab 1111 extending upwardly and a cathode tab 1121 extending downwardly.

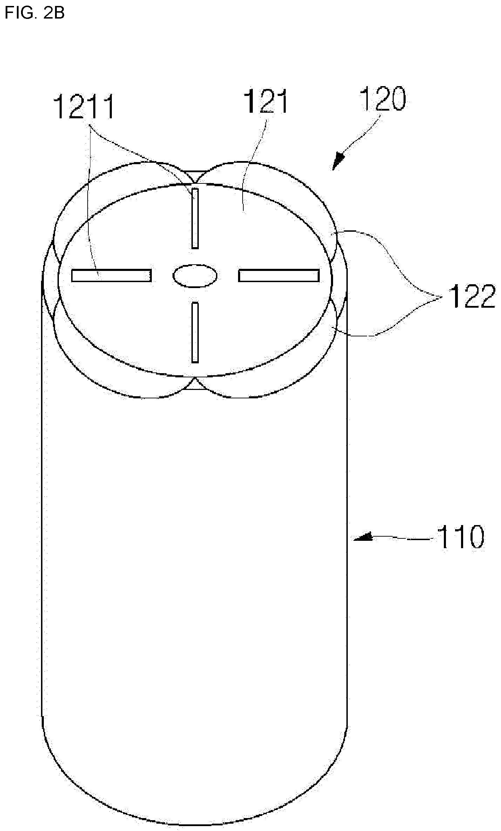

FIG. 2B is a diagram illustrating a later stage of manufacturing an exemplary secondary battery 100 according to the present disclosure. In the example shown in FIG. 2B, an anode current collector 120 may be provided. The anode current collector 120 may include a disk 121 having a plurality of slits 1211 and a plurality of extending portions 122. After being positioned on the anode tab 1111, the anode current collector 120 may be laser-welded to the anode tab 1111. In some examples, the slits 1211 of the anode plate 111 may be laser-welded to the anode tab 1111. In some examples, the extending portions 122 of the anode current collector 120 may protrude from the electrode assembly 110 by a predetermined length.

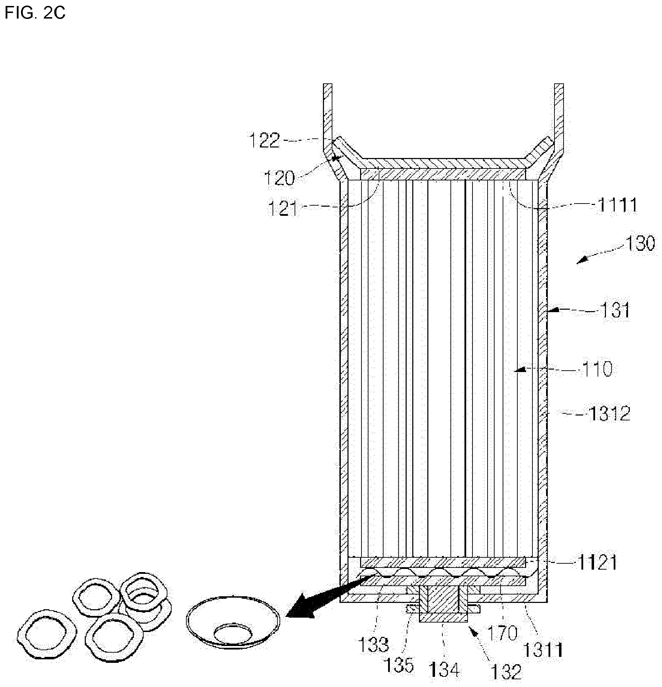

FIG. 2C is a diagram illustrating a later stage of manufacturing an exemplary secondary battery 100 according to the present disclosure. In the example shown in FIG. 2C, the electrode assembly 110 having the anode current collector 120 welded thereto may be coupled to the case assembly 130. In some examples, the case assembly 130 may include a case 131, a cathode current collector 133, and a terminal unit 132, and a spring 170 may be pre-positioned on the cathode current collector 133. Thus, the cathode tab 1121 of the electrode assembly 110 may come into contact with the spring 170. In some examples, the spring 150 may include a circular ring shape. In some examples, the extending portions 122 of the anode current collector 120 may directly contact the upper region (extension region) of the case 131. In some examples, the extending portions 122 of the anode current collector 120 may be coupled to the upper region of the case 131 in an interference-fit manner. In some examples, as the anode current collector 120 is interference-fitted, the spring 170 between the cathode tab 1121 and the cathode current collector 133 may be compressed.

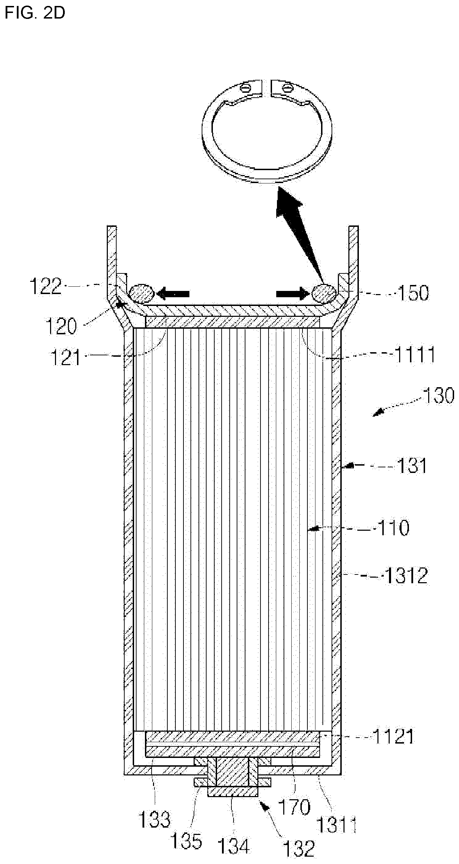

FIG. 2D is a diagram illustrating a later stage of manufacturing an exemplary secondary battery 100 according to the present disclosure. In the example shown in FIG. 2D, a support member 150 may be provided. The support member 150 may be fitted into the anode current collector 120. In some examples, the support member 150 may be fitted to the boundary between the disk 121 and the extending portions 122. In some examples, the support member 150 is provided in the form of an incised circular ring, and the diameter of the support member 150 before coupling may be greater than the diameter of the disk 121. Therefore, when the support member 150 is coupled to the anode current collector 120, the extending portions 122 may receive a force by which the extending portions 122 are pushed toward the side wall 1312 of the case 131.

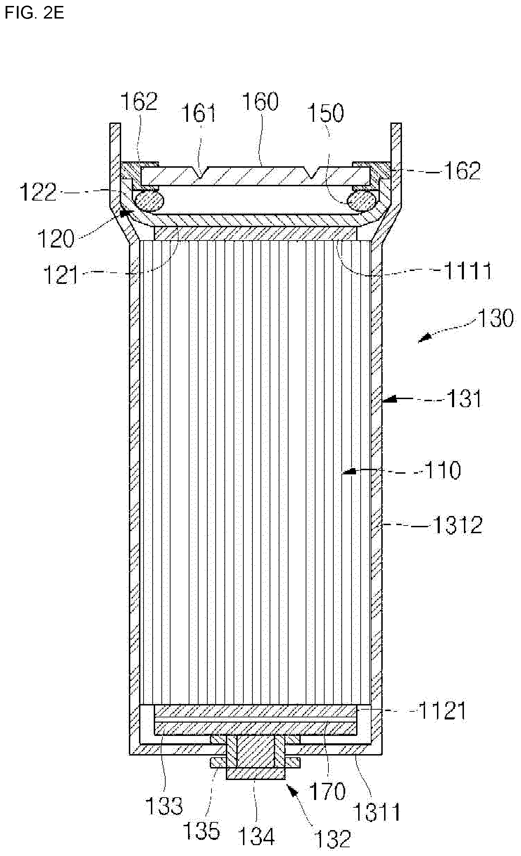

FIG. 2E is a diagram illustrating a later stage of manufacturing an exemplary secondary battery 100 according to the present disclosure. In the example shown in FIG. 2E, a safety vent 160 may be provided. In some examples, the safety vent 160 may be provided on the anode current collector 120 and the support member 150. In some examples, an insulating gasket 162 may be coupled around the safety vent 160. The safety vent 160 is electrically isolated from the case 131 by the insulating gasket 162, and the safety vent 160 and the gaskets 162 and 135 may block the upper region of the case 131.

In some examples, after the above-described steps, a beading process and a crimping process may be provided. In some examples, the beading process is a process in which a region of the case 131 corresponding to the anode current collector 120, for example, regions of the case 131 corresponding to the extending portions 122 is inwardly depressed. The crimping process is a process in which a top end of the case 131 is inwardly bent while covering the top surface of the insulating gasket 162. Through these processes, the inner region of the case assembly 130 may be completely isolated from the outer region.

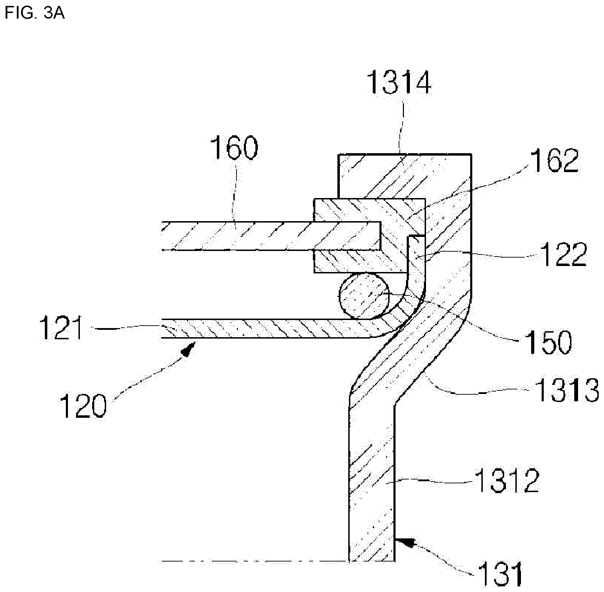

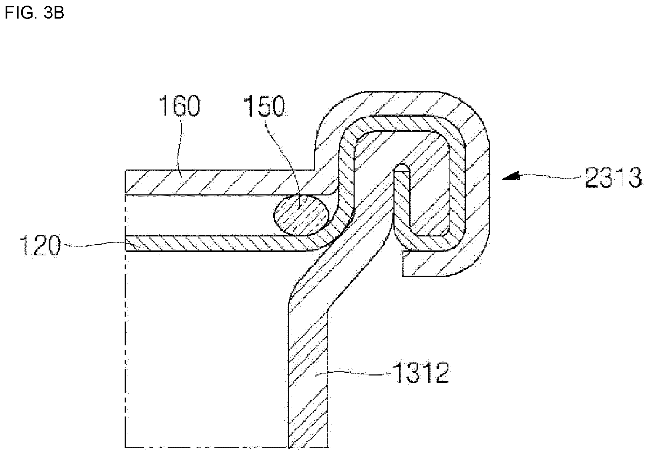

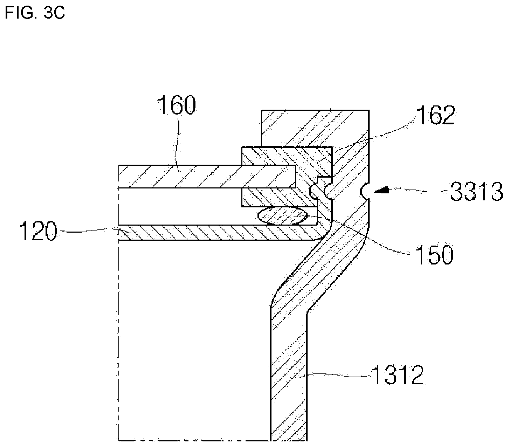

FIGS. 3A, 3B, and 3C are diagrams illustrating examples of beading/crimping, seaming, and curling for improving a sealing force in an exemplary secondary battery 100 according to the present disclosure.

As shown in FIG. 3A, in the beading/crimping process, the beading part 1313 may be provided by inwardly depressing the region of the case 131 corresponding to the anode current collector 120, and the crimping part 1314 may be provided by inwardly bending the region of the case 131 corresponding to the upper surface of the insulating gasket 162.

As shown in FIG. 3B, in a seaming process, a seaming portion 2313 may be provided by bending the case 131, the anode current collector 120, and the safety vent 160 in a stacked state, for example, in a clockwise direction. In some examples, by providing the seaming portion 2313, the insulating gasket 135 may be omitted. In some examples, end portions of the case 131 and the anode current collector 120 may be coupled in a state of facing each other, and the safety vent 160 may cover the anode current collector 120.

As shown in FIG. 3C, in a curling process, the extending portions 122 of the anode current collector 120 and the regions of the case 131 corresponding thereto may be provided with a curling portion 3313 that is cut to a certain depth in an inward direction. In some examples, a partial region of the anode current collector 120 may be depressed toward the insulating gasket 162, 135 by the means of the curling portion 3313.

In some examples, the beading part 1313, the crimping part 1314, the seaming portion 2313, and/or the curling portion 3313 may be provided alone or in combination, and with this structure, the sealing force of the secondary battery 100 may be further improved.

What has been described above is only one embodiment for carrying out the secondary battery of the present invention, and the present invention is not limited to the above-described embodiment. However, the technical spirit of the present disclosure lies in that anyone skilled in the art could make various changes, as claimed in the claims below, without departing from the gist of the present invention.

## Claims

1. A secondary battery comprising:
an electrode assembly having a first tab and a second tab provided at the opposite side to the first tab;
a first current collector which is welded on the first tab of the electrode assembly and has a diameter that is greater than the diameter of the electrode assembly; and
a case assembly comprising a case which accommodates the electrode assembly and the first current collector, a second current collector which is in close contact with the second tab of the electrode assembly, and a terminal unit which is electrically connected to the second current collector and penetrates through the case.

2. The secondary battery of claim 1, further comprising a support member disposed on the first current collector.

3. The secondary battery of claim 2, further comprising a safety vent disposed on the support member and blocking the case.

4. The secondary battery of claim 2, wherein the first current collector includes a disk, a plurality of slits provided on the disk and welded to the first tab, and a plurality of extending portions extending outward from the disk and brought into close contact with the case.

5. The secondary battery of claim 2, wherein the extending portions are bent from the disk and welded to the case.

6. The secondary battery of claim 1, wherein the support member is disposed on the extending portions.

7. The secondary battery of claim 1, further comprising a first gasket interposed between each of the extending portions, the support member, the case, and the safety vent.

8. The secondary battery of claim 7, further comprising a spring interposed between the second tab and the second current collector.

9. The secondary battery of claim 7, wherein the case further includes a beading part bent inwardly in a region corresponding to the first current collector and a crimping part bent inwardly while covering the first gasket.

10. The secondary battery of claim 7, wherein the case further includes a seaming portion bent outward together with the first current collector.

11. The secondary battery of claim 1, wherein the case further includes a curling portion bent toward the first current collector.
